(19) Europäisches Patentamt
European Patent Office
Office européen des brevets

(11) Publication number: 0 061 889
A1

(12) # EUROPEAN PATENT APPLICATION

(21) Application number: 82301517.7

(22) Date of filing: 23.03.82

(51) Int. Cl.³: C 08 F 8/32
C 10 M 1/08

(30) Priority: 23.03.81 US 246426

(43) Date of publication of application: 06.10.82 Bulletin 82/40

(84) Designated Contracting States: BE DE FR GB IT NL

(71) Applicant: EDWIN COOPER INC.
1525 South Broadway
St. Louis Missouri 63104(US)

(72) Inventor: Papay, Andrew Joseph
897 Rustic Manor Circle
Manchester Missouri 63011(US)

(72) Inventor: O'Brien, Joseph Peter
713 West Jewell Avenue
Kirkwood Missouri 63122(US)

(74) Representative: Bizley, Richard Edward et al,
BOULT, WADE & TENNANT 27 Furnival street
London EC4A 1PQ(GB)

(54) **Dispersant substances, a process for making dispersant substances, dispersant formulations and lubricating oil compositions containing said substances, and a method of imparting dispersancy to a lubricating oil.**

(57) An ashless dispersant/viscosity index improving substance comprising an ethylene a-olefin copolymer carrying grafted succinic groups amidated with ether amine groups, such as those derived from ether amines having the structure

$$R - O\text{-}(R_1NH)_n\text{-}H,$$

wherein R is an aliphatic hydrocarbon group and $R_1$ is a divalent aliphatic hydrocarbon group. The invention includes a process for making such substances, formulations/additive concentrates and lubricating oil compositions containing the same, and a method of imparting dispersancy properties to a lubricating oil comprising including therein such a substance.

EP 0 061 889 A1

Dispersant substances, a process for making dispersant substances, dispersant formulations and lubricating oil compositions containing said substances, and a method of imparting dispersancy to a lubricating oil

This invention relates, in general terms, to dispersant substances, a process for making dispersant substances, dispersant formulations and lubricating oil compositions containing said substances, and a method of imparting dispersancy to a lubricating oil.

Hydrocarbon-substituted succinimides have long been used as lubricating oil dispersants. Such succinimides can be represented by the disclosures of U.S. Patents 3,172,891, 3,202,678 and 3,219,666.

More recently, high molecular weight olefin compolymers, have been described as having succinic groups grafted thereto followed by amidation to form dispersants having viscosity improving properties. U.S. Patents 3,522,180, 3,551,336 and 3,598,738 describe the manufacture of high molecular weight olefin copolymers which may be thus treated. The final products are represented by the disclosures of U.S. Patents 3,235,503, 3,513,095, 4,089,794 and 4,219,432.

According to the present invention, new ashless dispersant-viscosity index (VI) improvers are made by grafting succinic groups to an ethylene a-olefin copolymer and amidating the grafted succinic groups with an ether amine. The grafting step preferably is carried out in hydrogen-treated mineral oil solvent such as hydrocracked mineral oil.

A preferred embodiment of the invention is an oil-soluble dispersant having viscosity index improving properties suitable for use in lubricating oil. The dispersant is characterized by having in its structure

(a) an ethylene $C_{3-18}$ copolymer backbone having a molecular weight of about 1000-500,000 and (b) succinimide units bonded to said copolymer, said succinimide units having the structure.

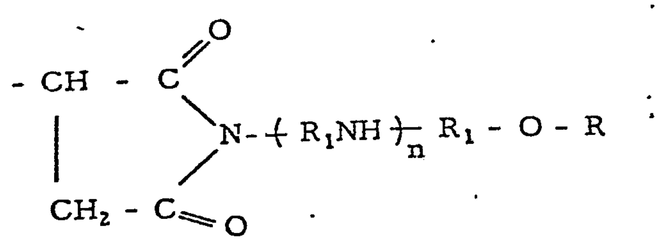

wherein R is an aliphatic hydrocarbon group containing 1 to 40 carbon atoms, $R_1$ is a divalent aliphatic hydrocarbon group containing 2 to 4 carbon atoms and n is an integer from 0 to 4.

In a more preferred embodiment, R is an aliphatic hydrocarbon group containing 1-30 carbon atoms, $R_1$ is a divalent 1,3-propane group and n is an integer from 0 to 2.

In a most preferred embodiment, R is an aliphatic hydrocarbon group containing 1-20 carbon atoms, $R_1$ is a divalent 1,3-propane group and n has an average value of 1.

Such dispersants can be made by a process comprising

(A) heating a mixture of (1) an ethylene $C_{3-18}$ a-olefin copolymer having an average molecular weight of 1000-500,000 and (2) maleic acid, anhydride or lower alkyl ester in the presence of a free radical producing catalyst at a temperature of 100-300°C. thereby grafting succinic units to said copolymer to form an intermediate, and

(B) reacting said intermediate with an ether amine having the structure

$$R - O \left( R_1NH \right)_p H$$

wherein R is an aliphatic hydrocarbon group containing 1 to 40 carbon atoms, $R_1$ is a divalent aliphatic hydrocarbon group containing 2 to 4 carbon atoms and p is an integer from 1 to 5 thereby forming succinimide units.

In a preferred embodiment of the process, R is an aliphatic hydrocarbon group containing 1-30 carbon atoms, $R_1$ is the divalent 1,3-propane group and p is an integer from 1 to 3.

In a more preferred embodiment of the process, R is an aliphatic hydrocarbon group containing 1-20 carbon atoms, $R_1$ is the divalent 1,3-propane group and p has an average value of 2.

The ethylene a-olefin copolymers used in making the products are known compositions in that they are high molecular weight polymers which may be made by polymerizing a mixture of ethylene and a-olefin using a Zeigler-Natta type catalyst.

Preferred catalysts for making the polymers contain alkyl aluminum halides, (e.g. diethylaluminum chloride), and vanadium compounds (e.g. vanadium oxychloride or tributyl vanadate). Such polymers have average molecular weights, $\overline{Mn}$, in the range of 1000-500,000. A more preferred molecular weight range is 10,000-100,000. Such terpolymers are rubber-like materials which are soluble in hydrocarbon solvents.

The a-olefins used in making the copolymers include those containing from 3 to 18 carbon atoms such as propylene, butene-1, isobutene, pentene, 2-ethyl-hexane-1, dodecene-1, and the like. The most preferred a-olefin is propylene.

The copolymers preferably contain 30-80 weight percent ethylene units and 20-70 weight percent a-olefin units. Optionally, the copolymer can be made using

ethylene, an a-olefin and a non-conjugated diene. Since the inclusion of the non-conjugated dienes is preferred but not essential, the range for units derived from non-conjugated dienes is 0 to 10 weight percent. When non-conjugated dienes are included, they are preferably in an amount of 1-10 weight percent based on the weight of the copolymer. Thus, the most preferred copolymer contains 30-79 weight percent ethylene units, 20-69 weight percent propylene units and 1-10 weight percent non-conjugated diene units.

The non-conjugated diene usually contains about 5-15 carbon atoms. Representative non-conjugated dienes include 1.4-hexadiene, 1,5-hexadiene, 1,5-cyclooctadiene, 1,4-pentadiene, 1-methyl-1, 5-hexadiene, dicyclopentadiene, methylene norbornene, 2,4-dimethyl-1, 7-octadiene, ethyl norbornadiene, and the like. The most preferred non-conjugated diene is 1,4-hexadiene alone or in combination with a bicyclic diene such as ethylidene norbornene or dicyclopentadiene.

The molecular weight of the copolymer can, for example, be controlled by applying hydrogen pressure such as described in U.S. Patent 3,051,690. Optionally, the molecular weight of a very high molecular weight polymer may be adjusted down by subjecting the polymer to mechanical shear.

Grafting of succinic groups to the copolymer may be carried out by heating a solution of the copolymer with a succinic precursor and a free radical-producing catalyst. Suitable succinic precursors are maleic acid, maleic anhydride, maleic acid-esters, preferably the lower $C_{1-5}$ alkyl esters, such as methyl, ethyl, isopropyl, n-propyl, isobutyl, n-butyl, n-pentyl, and the like. The preferred succinic precursor is maleic anhydride.

The amount of maleic acid, anhydride or ester should be at least one mole per mole of olefin copolymer. In

most cases, this is provided by mixing 0.01 to 50 weight percent maleic acid, anhydride, or ester into the copolymer solution. More preferably, the amount of maleic reactant is 0.02 to 10 weight percent based on the weight of the copolymer. When lower molecular weight copolymers (e.g. 1000-10,000) are used, then a higher amount of maleic compound is required to achieve the one mole per mole of copolymer.

Although not preferred, it might be possible to make substantially the same grafted products in substantially the same way by reacting the maleic reactant initially with the amine reactant to obtain an ammonium salt, amide or imide and then graft this intermediate to the olefin copolymer. Such products are equivalents.

Only a small amount of the free radical-producing catalyst is required. A useful range is from 0.2 to 10 weight percent based on the weight of the olefin copolymer. The free radical catalyst can be added all at the start of the graft reaction or periodically during the course of the reaction.

The graft reaction is carried out at elevated temperatures. The temperature should be high enough to cause the reaction to proceed but not so high as to cause decomposition of the reactants or products. In general, it should be conducted at the temperature at which the particular free radical-producing catalyst is known to form free radicals. This will be dependent somewhat on the catalyst being used. A useful temperature range in which to work is 140°C. to 200°C.

A wide variety of free radical-producing catalyst can be employed. Such catalysts are well known in the art. Representative examples of free radical-producing catalysts include peroxides, hydroperoxides and azo-compounds such as di-tert-butylperoxide, benzoylperoxide, tert-butyl perbenzoate, azobutyronitrile, dicumyl-

peroxide, 2,5-dimethyl-hex-3-yne-2,5-bis-tert-butylperoxide, 2,5-dimethylhexane-2,5-bis-tert-butylperoxide.

The grafting is preferably carried out by dissolving the copolymer in hydrogen-treated mineral oil, adding the maleic reactant and free radical-producing catalyst and heating the mixture to an elevated temperature. In general, the oil solution will contain 1-15 weight percent copolymer. Heating the oil to 100°-250°C. under a nitrogen atmosphere helps form the solution. Use of hydrogen-treated mineral oil as a reaction medium is beneficial. Hydro-treating lowers the unsaturate content of the oil so that grafting of the maleic compound occurs mainly on the copolymer. Hydrogen-treated mineral oil can be obtained using standard petroleum refining procedures such as hydrocracking, hydrotreating, hydrofinishing and the like. It has been found that limiting the grafting to the copolymer results in a product having superior dispersing power.

Useful ether amines for the process of the invention are those having the structure

$$R - O \left( R_1NH \right)_p H$$

wherein R is a monovalent aliphatic hydrocarbon group containing one to 40 carbon atoms, $R_1$ is a divalent aliphatic hydrocarbon group containing 2 to 4 carbon atoms and p is an integer from one to 5. Illustrative examples of the ether amines are:

3-(dodecyloxy)-1-propanamine, 2-(methoxy) ethyl amine, 4-(decyloxy)-butyl amine, 3-(eicosyloxy) propyl amine, 3-(triactontyloxy) propyl amine, 2-(tetracontyloxy) ethyl amine, N-[3-(methoxy) propyl]1,3-propane diamine, N-[3-(octyloxy) propyl] 1,3-propane diamine, N[4-(butoxy) butyl] 1,4-butane diamine, N[3-(decyloxy)

propyl] 1,3-propane diamine, N-[3-(decyloxy) propyl] 1,3-propane diamine, N-[3-(dodecyloxy) propyl] 1,3-propane diamine, N-[2-(octadecyloxy)-ethyl]ethylene diamine, N-[4-(eicoyloxy) butyl] 1,4-butane diamine, N- [4-(triaconyloxy) butyl] 1,4-butane diamine, N- [3-(tetracontyloxy)- propyl] 1,3-propane diamine, N- [3-[3-(hexyloxy) propylamino] propyl] 1,3-propane diamine, N- [4- [4-(decyloxy) butylamino] butyl] 1,4-butane diamine, N- [3- [3-(dodecyloxy) propylamino] propyl] 1,3-propane diamine, N- 3- 3-(tetradecyloxy) propylamino] propyl] 1,3-propane diamine, N- [2- [2-(octyldecyloxy) ethylamino] ethyl] ethylene diamine, N- [3-[3-(eicosyloxy) propylamino] propyl] 1,3-propane diamine.

The more preferred ether amines are those having the structure

$$R-O+CH_2CH_2CH_2-NH+_p H$$

wherein R is an aliphatic hydrocarbon group containing about 1-30 carbon atoms and p is an integer from 1 to 3. In a still more preferred embodiment, R is an aliphatic hydrocarbon group containing 1-20 carbon atoms and n averages about 2. Examples of these ether amines are N [3-(octyloxy) propyl] 1,3-propane diamine, N-[3-(decyloxy) propyl] 1,3-propane diamine, N [3-(dodecyloxy) propyl] 1,3-propane diamine, N- [3-(tetradecyloxy) propyl 1,3-propane diamine, N- [3-(octadecyloxy)-propyl] 1,3-propane diamine, N- [3-(eicosyloxy) propyl] 1,3-propane diamine and mixtures thereof. Most preferably, p has an average value of about 2.

Suitable ether amines are available commercially from Jetco Chemicals, Inc. under the names "Jet Amine DE 12/15" and "Jet Amine DE 8/10" wherein the numbers are the number of carbon atoms in the R alkoxy groups. Other useful ether amines are available from Armak Company under the name "Duomeen EA 26".

The amount of amine should be an amount which supplies at least 0.5 moles of amine per mole of succinic groups. More preferably, 0.8-2 moles of amine are used per mole of succinic group.

The amidation can be conducted by merely mixing the amine with the grafted copolymer and heating the mixture to a temperature high enough to cause amidation. A useful temperature range is 120° to 250°C. A more preferred temperature range is 140° to 180°C.

In a more preferred embodiment, the succinic grafted copolymer is first esterified with an alkanol, e.g. $C_{1-10}$ alkanols such as methanol, ethanol, isobutanol, n-propanol, n-butanol, isobutanol, n-pentanol, 2-ethylhexanol, 2-ethyloctanol and the like. This converts all or most of the succinic groups to succinic esters or acid-esters. In this embodiment the amount of alkanol is preferably at least one mole per mole of succinic groups and more preferably 1-2.5 moles per mole of succinic group.

The esterification reaction can be conducted under conditions known in the art to effect ester formation. A useful temperature range is 100° to 180°C.

Following this more preferred embodiment, the amine reactant is added as before. This mixture is heated to amidation temperature. The primary amine group is quite reactive and will displace most of the ester groups forming mixtures of amides and imides containing low amounts of ester groups. This ester displacement can be conducted at any temperature high enough to cause the reaction to proceed but not high enough to cause decomposition. A very effective way to conduct the reaction is to heat the mixture to a temperature sufficient to distill out displaced alkanol. At the end of the amidation, it is preferred that vacuum be applied to complete removal of displaced alkanol and water.

The following Examples serve to illustrate how the products of the invention may be made.

EXAMPLE 1

In a reaction vessel were placed 496 grams of hydrocracked 80 neutral oil and 63.7 grams of an ethylene propylene 1,4-hexadiene terpolymer having a weight average molecular weight of 220,000. This was stirred under nitrogen at 220°C. until the polymer dissolved. It was then cooled to 180°C. and 2.1 grams of maleic anhydride added. While stirring at 180°C., 0.6 ml. of di-*tert* butyl peroxide was added over a 40 minute period. Stirring was continued for 30 minues at 180°C. The mixture was sparged with nitrogen while being held at 28 inches Hg vacuum to remove volatiles. It was then cooled and 2.7 grams of 2-ethyl hexanol was added to esterify the succinic groups. Infrared showed approximately one-half of the succinic groups were converted to half ester acid groups. Then, 7.6 grams of a mixture of N-[3-(dodecyloxy pentadecyloxy) propyl] 1,3-propane diamine ("Jet Amine DE 12/15") and the mixture stirred for one hour at 160°C. It was then stripped at 3866.28 Newtons per square meter for 30 minutes to remove volatiles leaving as the product a viscous amber liquid.

EXAMPLE 2

In a reaction vessel were placed 496 grams of hydrocracked 80 neutral oil and 63.5 grams of ethylene propylene diene copolymer as used in Example 1. This was heated to 220°C. and stirred until dissolved. At 180°C. 2.1 grams of maleic anhydride was added followed by 0.6 ml. of di-*tert*-butyl peroxide over a 20-minute period. This was stirred one hour at 180°C. and vacuum stripped to remove volatiles. At 180°C., 2.7 grams of 2-ethyl hexanol was added. This was stirred for 79 minutes following which 6.4 grams of a mixture of N[3-(octy-

loxy decyloxy) propyl] 1,3-propane diamine ("Jet Amine DE 8/10") was added. This was stirred while heating to 170°C. with a nitrogen sweep to remove water and other volatiles. It was then stirred one hour at 170°C. and then stripped at 3732.96 Newtons per square metre leaving a viscous liquid product.

EXAMPLE 3

In a reaction vessel were placed 496 grams of hydrocracked 80 neutral oil and 64.3 grams ethylene propylene diene copolymer as used in Example 1. This was stirred at 220°C. under nitrogen until dissolved. Then at 180°C., 2.1 grams of maleic anhydride was added. This was stirred under nitrogen at 180°C. while 0.6 ml. of di-tert -butyl peroxide was added over a 19 minute period. Stirring was continued for 1.5 hours at 180°C. It was then stripped at 18 inches Hg. vacuum. It was cooled to 150°C. and 1.7 grams of 2-ethyl hexanol was added. This was stirred for 80 minutes at which time 5.5 grams of N-[3-(2-ethylhexyloxy)-propyl] 1-.3-propane diamine (Duomeen EA 26) was added and the mixture stirred at 160°C. for one hour. It was then stripped at 3732.96 Newtons per square meter leaving a residual viscous product.

Other dispersants can readily be made following the above general procedure by substituting other olefin copolymers and/or ether amines as described herein.

The respective effectiveness of the additives as lubricating oil dispersants were measured using a bench dispersancy test. In this test, an asphaltene sludge was made by air oxidation of 100 neutral oil using an iron naphthenate catalyst. The oxidized oil containing precipitated sludge was diluted with heptane to dissolve part of the sludge which was filtered off. The sludge saturated heptane diluted filtrate stabilized with a small amount of butanol was used as the test sludge.

The test was conducted by mixing 1 ml. of sludge solution into 10 ml. 100 neutral mineral oil containing various amounts of test additives. THe test samples were left standing for 16 plus hours and then rated visually. The least effective dispersant resulted in a precipitate (PPT). Improvement was in the order of heavy haze (HH), medium haze (MH), light haze (LH), and trace haze (TH). The best dispersant activity resulted in a clear sample with no precipitate.

The following table shows the performance of various additives at different concentrations.

| Additive of Example | Additive concentration (percent) | | | | |
|---|---|---|---|---|---|
| | .065 | 0.125 | 0.25 | 0.5 | 1.0 |
| 1 | PPT | HH | MH | LH | TH |
| 2 | PPT | HH | MH | LH | TH |
| 3 | PPT | HH | MH | LH | TH |

These results show that the additives were quite effective at concentrations as low as 0.125 percent.

The additives are used in lubricating oil at a concentration which achieves the desired level of dispersancy and VI improvement. They may also be used in combination with non-dispersant VI improvers to achieve desired levels. This can usually be accomplished by adding 1 to 10 percent of the above dispersant VI improver. The final oil blend would then contain 0.1 to 1.0 percent functionalized polymer.

The additives can be used in mineral oil or in synthetic oils of viscosity suitable for use in the crankcase of an internal combustion engine. Crankcase lubricating oils have a viscosity up to 0.0000156 $m^2$/sec. at $210^oF$.

Crankcase lubricating oils of the present invention have a viscosity up to about SAE 50. Sometimes such

motor oils are given a classification at both $0^{o}$ and $210^{o}$F., such as SAE 10W 40 or SAE 5W 30.

Mineral oils include those of suitable viscosity refined from crude oil from all sources including Gulfcoast, midcontinent, Pennyslvania, California, Mideast, North Sea, Alaska and the like. Various standard refinery operations can be used in processing the mineral oil.

Synthetic oil includes both hydrocarbon synthetic oil and synthetic esters. Useful synthetic hydrocarbon oils include liquid polymers of a-olefins having the proper viscosity. Especially useful are the hydrogenated liquid oligomers of $C_{6-12}$ a-olefins such as a -decene trimer. Likewise, alkylbenzenes of proper viscosity can be used, such as didodecylbenzene.

Useful synthetic esters include the esters of both monocarboxylic acid and polycarboxylic acid as well as monohydroxy alkanols and polyols. Typical examples are didodecyl adipate, trimethylol propane tripelargonate, pentaerythritol tetracaproate, (di- 2-ethylhexy) adipate, dilauryl sebacate and the like. Complex esters prepared from mixtures of mono- and dicarboxylic acid and mono- and polyhydroxyl alkanols can also be used.

Blends of mineral oil with synthetic oil are particularly useful. For example, blends of 10-25 weight percent hydrogenated a-decene trimer with 75-90 weight percent 0.0000321 $M^2$/sec ($100^{o}$F.) mineral oil results in an excellent lubricant. Likewise, blends of about 15-25 weight percent di- (2-ethylhexyl) adipate with mineral oil of proper viscosity results in a superior lubricating oil. Also blends of synthetic hydrocarbon oil with synthetic esters can be used. Blends of mineral oil with synthetic oil are especially useful when preparing low viscosity oil (e.g. SAE 5W 20) since they permit these low viscosities without contributing excessive volatility.

The more preferred lubricating oil compositions

include zinc dihydrocarbyldithiophosphate (ZDDP) together with the present additives. Both zinc dialkyldithiophosphates amd zinc dialkaryldithiophosphates as well as mixed alkyl-aryl ZDDP are useful. A typical alkyl-type ZDDP contains a mixture of isobutyl and isoamyl groups. Zinc di-(nonylphenyl) dithiophosphate is a typical aryl-type ZDDP. Good results are achieved using sufficient ZDDP to provide 0.01-0.5 weight percent zinc. A preferred concentration supplies 0.05-0.3 weight percent zinc.

Another additive useful in the present oil compositions are the alkaline earth metal petroleum sulfonates or alkaline earth metal alkaryl sulfonates. Examples of these are calcium petroleum sulfonates, magnesium petroleum sulfonates, barium alkaryl sulfonates, calcium alkaryl sulfonates or magnesium alkaryl sulfonates. Both the neutral and the overbased sulfonates having base numbers up to 400 can be beneficially used. These are used in an amount to provide 0.05-1.5 weight percent alkaline earth metal and more preferably 0.1-1.0 weight percent. In a most preferred embodiment the lubricating oil composition contains a calcium petroleum sulfonate or alkaryl (e.g. alkylbenzene) sulfonate.

Other viscosity index improvers can be included such as the polyalkylmethacrylate type or the ethylenepropylene copolymer type. Likewise, styrene-diene VI improvers or styrene-acrylate copolymers can be used. Alkaline earth metal salts of phosphosulfurized polyisobutylene are useful.

Most preferred crankcase oils also contain supplemental ashless dispersants such as the polyolefin-substituted succinamides and succinimides of polyethylene polyamines such as tetraethylenepentamine. The polyolefin succinic substituent is preferably a polyisobutene group having a molecular weight of from 800 to

5000. Such ashless dispersants are more fully described in U.S. Patents 3,172,892, and 3,219,666.

Another useful class of ashless dispersants are the polyolefin succinic esters of mono- and polyhydroxy alcohols containing 1 to 40 carbon atoms. Such dispersants are described in U.S. Patents 3,381,022 and 3,522,179.

Likewise, mixed ester amides of polyolefin substituted succinic acid made using alkanols, amines and or aminoalkanols represent a useful class of ashless dispersants.

The succinic amide, imide and or ester type ashless dispersants may be boronated by reaction with a boron compound such as boric acid. Likewise, the succinic amide, imide, and or ester may be oxyalkylated by reaction with an alkylene oxide such as ethylene oxide or propylene oxide.

Other useful ashless dispersants include the Mannich condensation products of polyolefin-substituted phenols, formaldehyde and polyethylene polyamine. Preferably, the polyolefin phenol is a polyisobutylene-substituted phenol in which the polyisobutylene group has a molecular weight of from 800 to 5000. The preferred polyethylene polyamine is tetraethylene pentamine. Such Mannich ashless dispersants are more fully described in U.S. Patents 3,368,972; 3,413,347; 3,442,808; 3,448,047; 3,539,633; 3,591,598; 3,600,372; 3,634,515; 3,697,574; 3,703,536; 3,704,308; 3,725,480; 3,726,882; 3,736,357; 3,751,365; 3,756,953; 3,792,202; 3,798,165; 3,798,247 and 3,803,039.

VI improvers are usually not compatible with additive concentrates and are added separately to the oil blend.

The present invention includes additive concentrates or dispersant formulations comprising a dispersant

substance as defined above and formulated for use with lubricating oil. Also included is a method of imparting dispersancy properties to lubricating oil comprising incorporating therein a dispersant substance as defined above.

CLAIMS

1. An ashless dispersant/viscosity index improving substance comprising an ethylene a-olefin copolymer carrying grafted succinic groups amidated with ether amine groups.

2. An oil soluble compound having in its structure an ethylene $C_{3-18}$ a-olefin copolymer backbone of molecular weight 1000-500,000 with succinimide units bonded thereto of the structure

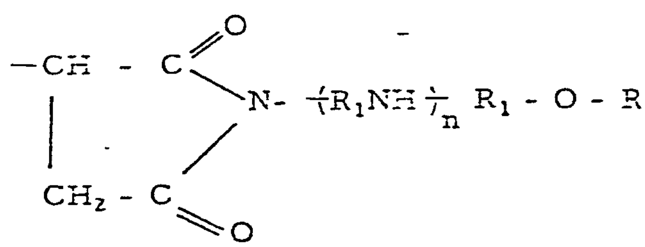

,

wherein R is an aliphatic hydrocarbon group containing 1 to 40 carbon atoms, $R_1$ is a divalent aliphatic hydrocarbon group containing 2 to 4 carbon atoms and n is an integer from 0 to 4.

3. A compound as claimed in claim 2, wherein the copolymer backbone contains 30-79 weight percent ethylene units, 20-69 weight percent propylene units, and 1-10 weight percent of units derived from non-conjugated diene(s) containing 5 to 15 carbon atoms.

4. A compound as claimed in claim 3, wherein the non-conjugated diene(s) is/are 1,4-hexadiene, ethylidene norbornene, and/or dicyclopentadiene.

5. A compound as claimed in claim 4, wherein the non-conjugated diene(s) comprise 1,4-hexadiene in combination with ethylidene norbornene or dicyclopentadiene.

6. A compound as claimed in any one of claims 1 to 6, wherein R contains 1-30 carbon atoms, $R_1$ is a divalent 1,3-propane group and n is 0 to 2.

7. A compound as claimed in any one of claims 1 to 6, wherein R contains 1-20 carbon atoms, $R_1$ is a divalent 1,3-propane group and n averages about 1.

8. A process for producing oil soluble compound suitable for use in lubricating oil as a dispersant, which process comprises

(A) heating a mixture of an ethylene $C_{3-18}$ a-olefin copolymer having an average molecular weight of 1000-500,000 and maleic acid, anhydride or lower alkyl ester in the presence of a free radical-producing catalyst at a temperature of 100-300°C. to graft succinic units on to said copolymer,
optionally,
(B) reacting the products from (A) with a $C_{1-10}$alkanol to esterify at least some of the grafted succinic groups, and

(C) reacting the product from A or B with an ether amine having the structure

$$R - O (-R-NH-)_p H ,$$

wherein R is an aliphatic hydrocarbon group containing 1 to 40 carbon atoms, $R_1$ is a divalent

aliphatic hydrocarbon group containing 2 to 4 carbon atoms and p is an integer from 1 to 5, to form succinimide units.

9. A process as claimed in claim 8, wherein the copolymer has a composition as defined in any one of claims 3 to 5.

10. A process as claimed in claim 8 or claim 9, wherein R contains 1-30 carbon atoms, $R_1$ is a divalent 1,3-propane group and p is 1 to 3.

11. A process as claimed in claim 8 or claim 9, wherein R contains 1-20 carbon atoms, $R_1$ is a divalent 1,3-propane group and p averages 2.

12. A dispersant formulation comprising a substance as claimed in claim 1 or a compound as claimed in any one of claims 2 to 7 formulated for use with lubricating oil.

13. A lubricating oil composition comprising a major amount of oil of lubricating viscosity and a minor dispersant amount of a substance as claimed in claim 1 or a compound as claimed in any one of claims 2 to 7.

14. A method of imparting dispersancy properties to a lubricating oil, which method comprises incorporating in the oil a substance as claimed in claim 1 or a compound as claimed in any one of claims 2 to 7.

REB/EA 568

0061889

European Patent Office

# EUROPEAN SEARCH REPORT

Application number

EP 82 30 1517

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | GB-A-1 441 600 (LUBRIZOL)<br>*Claims 1-3*<br>--- | 1,8,12 -14 | C 08 F 8/32<br>C 10 M 1/08 |
| A | US-A-3 927 104 (E.F.MILLER)<br>*Claim 1*<br>--- | 1,12-14 | |
| A | FR-A-2 423 530 (LUBRIZOL)<br>*Claims 1,43*<br>--- | 1,3,4, 12-14 | |
| A | FR-A-2 383 225 (SHELL)<br>*Claim 1*<br>----- | 1,12-14 | |
| | | | TECHNICAL FIELDS SEARCHED (Int Cl 3) |
| | | | C 08 F 8/32 |

The present search report has been drawn up for all claims

| Place of search | Date of completion of the search | Examiner |
|---|---|---|
| THE HAGUE | 22-07-1982 | PERMENTIER W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82